(19) **Europäisches Patentamt / European Patent Office / Office européen des brevets**

(11) **EP 4 560 544 A1**

(12) **EUROPEAN PATENT APPLICATION**

(43) Date of publication:
**28.05.2025   Bulletin 2025/22**

(21) Application number: **24168871.2**

(22) Date of filing: **05.04.2024**

(51) International Patent Classification (IPC):
**G06N 10/60** (2022.01)    **G06N 10/20** (2022.01)
**G06N 5/01** (2023.01)    **G06N 10/40** (2022.01)

(52) Cooperative Patent Classification (CPC):
**G06N 5/01; G06N 10/20; G06N 10/40; G06N 10/60**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **24.11.2023  EP 23211995**
**06.03.2024  EP 24161900**

(71) Applicant: **Kipu Quantum GmbH**
**76137 Karlsruhe (DE)**

(72) Inventors:
• **ZHANG, Qi**
**10437 Berlin (DE)**

• **PERSEGUERS, Sébastien**
**1700 Fribourg (CH)**
• **MICHON, Eric**
**10437 Berlin (DE)**
• **TRAUTMANN, Jan**
**69115 Heidelberg (DE)**
• **HEGADE, Narendra N.**
**10439 Berlin (DE)**
• **SOLANO, Enrique**
**10405 Berlin (DE)**

(74) Representative: **Sonnenberg Harrison Partnerschaft mbB**
**Herzogspitalstraße 10a**
**80331 München (DE)**

(54) **METHOD FOR SOLVING AN OPTIMIZATION PROBLEM**

(57)    The invention relates to a computer-implemented method, to a computer program and to a computer device as described herein.

In particular, the invention relates to a computer-implemented method for solving a computation problem. The invention uses an Ising Hamiltonian in the form $\frac{H_{Ryd}(t)}{\hbar} = \frac{\Omega(t)}{2}\left[\cos\varphi(t)\sum_{i=1}^{N}\sigma_i^x - \sin\varphi(t)\sum_{i=1}^{N}\sigma_i^y\right] - \Delta(t)\sum_{i=1}^{N}n_i + \sum_{i<j}J_{i,j}\,n_i n_j$ wherein $n_i = (1 - \sigma_i^z)/2$, $\Omega(t)$ is the Rabi frequency of the transition and can be dynamically controlled by controlling the power of the coupling laser with time t, $\Delta(t)$ corresponds to the detuning with regards to the two-photon transition and can be controlled dynamically by controlling the frequency of the coupling laser with time t, $\varphi(t)$ is the phase of the laser and can be controlled dynamically. $\Omega(t)$, $\Delta(t)$ and $\varphi(t)$ can be controlled independently, wherein the term containing $J_{i,j}$ is the interactions term, for example implemented via a Rydberg blockade mechanism is optionally rendered site-dependent or dynamically tunable, wherein the problem is solved by finding the ground state of the final Hamiltonian.

EP 4 560 544 A1

**Figure 1**

## Description

The invention relates to quantum computing, in particular analog quantum computing. Certain embodiments are defined by the appended independent and dependent claims.

In particular, the method is an analog counterdiabatic quantum computing (ACQC) method which is a computer-implemented method for solving a combinatorial optimization problem such as maximum independent set (MIS) problems, using an analog quantum computer.

The method is based on the implementation of a counterdiabatic method on an analog quantum hardware which is to add an exact adiabatic gauge potential of the driving part of the Hamiltonian to the Hamiltonian of the system and then implement the total Hamiltonian on the analog quantum computing hardware. The driving Hamiltonian refers to a part of the Hamiltonian that represents an external field or control signal that drives or manipulates the quantum system. It describes the action of an external field or control signal that drives or influences the quantum system's dynamics, for example the interaction between neutral atoms and laser fields involving using laser beams to trap, cool, manipulate, and control neutral atoms. Compared with the method without this invention, this method provides a general analytical solution which does not necessarily require an optimization iteration on the hardware itself, most importantly, it can solve the optimization problems on the hardware faster with better quality of the results.

In certain embodiments, the analog counterdiabatic quantum computing method is iterable (I-ACQC) to solve the combinatorial optimization problems such as maximum independent set (MIS) problems, in particular on current neutral atoms hardware.

## Background of the Invention

Quantum computing is a framework for computation, which aims at outperforming classical computation by exploiting quantum mechanical phenomena. Analog quantum computing refers to a method of quantum computation that utilizes continuous variables or properties of quantum systems to perform computations. In contrast to digital quantum computing, which uses discrete quantum qubits to encode information, analog quantum computing often involves manipulating continuous quantum variables, for example the position and momentum of particles, the control field amplitudes and phase of quantum states in quantum systems. This approach aims to perform computations by directly encoding and processing information using the continuous properties of quantum systems. These systems can represent and manipulate information using the continuous properties of quantum states, potentially offering advantages in certain computational tasks compared to digital quantum computing. A analog quantum computing algorithm is to provide well-designed functions for the continuous control variables of the corresponding time-dependent Hamiltonian of analog quantum computers during the initial computation time t=0 until the final time t=T so that the quantum computing system evolves towards the ground state of this time-dependent Hamiltonian at the computation time t=T which is the target final state. Finally, the optimization problem is solved when the quantum system reaches the target ground state since the ground state at the final time t=T, as the ground state at this stage encodes the solution to the optimization problem.

In analog quantum computing, the concept of a qubit, as traditionally understood in digital quantum computing, is somewhat different due to the continuous-variable nature of analog quantum systems. In digital quantum computing, a qubit is the basic unit of information and is represented as a two-level quantum system, generally denoted by $|0\rangle$ and $|1\rangle$). It can exist in a superposition of states, allowing it to encode and process information in quantum algorithms, e.g.,

$$\frac{(|0\rangle + |1\rangle)}{\sqrt{2}}$$

. This plays an important role in the development of quantum algorithms outperforming classical algorithms. One example of the physical device that may be used as a qubit is an electron spin.

Pauli operators are represented by three 2x2 matrices, known as the Pauli matrices, each corresponding to a different quantum spin direction (x, y, and z) for a qubit. The operators and their matrices are as follows:

$$\sigma_x = \begin{bmatrix} 0 & 1 \\ 1 & 0 \end{bmatrix}, \sigma_y = \begin{bmatrix} 0 & -i \\ i & 0 \end{bmatrix}, \sigma_y = \begin{bmatrix} 1 & 0 \\ 0 & -1 \end{bmatrix}$$

In dynamic quantum systems like those governed by the adiabatic principle or in quantum simulations, the Pauli operators can be associated with time-dependent coefficients. These coefficients effectively modulate the influence of each Pauli operator over time, allowing for precise control over the qubit's evolution and interactions within a quantum system. If $H(t)$ is a Hamiltonian of a system at time $t$, it can be expressed as a sum of Pauli operators with time-dependent coefficients:

$$H(t) = \sum_i \alpha_i(t)\sigma_i^x + \beta_i(t)\sigma_i^y + \gamma_i(t)\sigma_i^z)$$

where $\alpha_i, \beta_i, \gamma_i$ are the time-dependent coefficients for the *i - th* qubit.

The Bloch sphere is a 3D model that represents a qubit's state as a point on a sphere, where the poles correspond to the binary states 10) and 11), and any point on the surface shows a mix of these states with a specific quantum phase. Mathematically, a qubit state on the Bloch sphere can be represented as $|\psi\rangle = cos\,(\theta/2)|0\rangle + sin\,(\theta/2)|1\rangle$ $|\psi\rangle = cos(\theta/2)|0\rangle +$ exp $(i\phi)\,sin(\theta/2)$ I 1), where $\theta$ and $\phi$ are the polar and azimuthal angles, respectively, defining its position on the sphere.

In analog quantum computing, qubits are not discrete entities like in digital quantum computing. Instead, continuous-variable quantum systems are utilized, and the basic unit of information is often represented by continuous quantum variables such as the position, momentum, or field amplitudes of the quantum system. These continuous variables serve as the analog counterpart to the qubit. For instance, in systems that utilize continuous-variable quantum states, properties such as the continuous amplitudes of light or the continuous degrees of freedom of quantum harmonic oscillators can be manipulated and processed to perform computations. These continuous variables play a role analogous to qubits in digital quantum computing.

Moreover, in analog quantum computing, the time evolution of qubits or continuous variables is typically described by quantum mechanical operators and equations, and it can be visualized by considering how these continuous variables change and interact with each other over time. The time evolution of quantum states under a Hamiltonian operator involves the use of quantum dynamics governed by Hamiltonians. It is described by the Schrödinger equation which is a fundamental equation in quantum mechanics. For continuous-variable systems, this equation might involve operators corresponding to position, momentum, or other continuous variables representing the system. For example, in systems involving continuous-variable quantum optics or harmonic oscillators, the evolution of field amplitudes or modes might be described by differential equations representing the dynamics of these variables under specific Hamiltonians.

In digital quantum computing, quantum gates are fundamental operations that manipulate qubits by performing specific transformations on their quantum states. These gates are crucial for performing computations and implementing quantum algorithms. However, in analog quantum computing, the operations and transformations are not discretely applied gates as in digital quantum computing. Instead of discrete quantum gates acting on individual qubits, analog quantum computing typically involves continuous operations and transformations on the continuous variables that represent the quantum states. These operations are more akin to continuous transformations, such as squeezing, displacing, or evolving the continuous properties of the quantum system over time using Hamiltonians or continuous-variable operations.

The handling and manipulation of these continuous quantum variables in analog quantum computing are different from the discrete operations performed on qubits in digital quantum computation. Analog quantum computing harnesses continuous variables, offering natural handling of continuous data and precision in computations. It holds promise for efficient quantum simulation, potential error resilience, resource efficiency in certain computational tasks, high-precision measurements in sensing and metrology, and diversification of algorithms for specific computational problems. However, it is an evolving field facing challenges like error correction and scalability, with researchers working to unlock its full potential compared to digital quantum computing.

In general, while the concept of gates as discrete operations on qubits is not directly applicable in analog quantum computing, there are analogs in the form of continuous operations or transformations that affect the continuous variables characterizing a quantum system's state. These continuous transformations play a role in manipulating and evolving the quantum information encoded in the continuous-variable quantum systems, enabling computation in an analog context. Furthermore, the implementations of analog quantum computing vary between different quantum computer architectures.

For analog quantum computing, adiabatic quantum computing is a common method which is to choose the values of adiabatic control functions to be the values of continuous variables where this Hamiltonian is named adiabatic Hamiltonian. In another words, adiabatic quantum computing uses an adiabatic Hamiltonian to govern the quantum dynamics of the quantum analog computing system where the adiabatic Hamiltonian is controlled by the continuous quantum variables with time. Therefore, the time evolution of quantum state under this adiabatic Hamiltonian evolves adiabatically towards a final state which is the quantum state of the system at the end of computation time t=T. If the quantum computer's computation time is as slow as possible, the final state will be the ground state of the adiabatic Hamiltonian at the final time which encodes the solution to the combinatorial optimization problem, and the problem is solved. However, the adiabatic quantum computing requirements are experimentally hard to fulfill which reduces the probability of successfully solving the problem at the final computation time (success probability) on the hardware or which requires long computation time to solve the problem and it may longer than the hardware limitation.

## Short Description of the Invention

This summary is provided to introduce a selection of concepts in a simplified form that are further described below in the detailed description. This summary is not intended to identify key features of the invention, nor is it intended to be used to limit the scope of the invention.

The object of the invention is to provide an improved method for solving a combinatorial optimization problem using an analog quantum computer.

This object is achieved by the present invention, for example by the features of the appended claims. Further embodiments and examples are apparent from the dependent claims, the detailed description, and the accompanying drawings of the figures. In particular, the method provides an improved design of continuous quantum variables.

In a first aspect, the invention pertains to a computer-implemented method for solving an optimization problem with a given analog quantum computer.

In certain embodiments, the method comprises the following steps:

- Providing a time-dependent adiabatic Hamiltonian $H_{ad}$ encoding the combinatorial optimization problem to a Quantum Processing Unit (QPU) of the analog quantum computer, wherein the adiabatic Hamiltonian $H_{ad}$ comprises:

  - a driving part comprising a first set of continuous quantum variables representing Pauli operators and their time-dependent or constant coefficients which are, in particular, controllable quantum variables that can be manipulated by time on the analog quantum computer, and

  - an interaction part which comprises many-body terms of the adiabatic Hamiltonian describing interactions between qubits,

- Calculating counterdiabatic (CD) terms as being an adiabatic gauge potential of the driving part of the adiabatic Hamiltonian, and providing the counterdiabatic (CD) terms comprising Pauli operators and their time-dependent coefficients to compensate the non-adiabatic transition during the computation to the QPU,
- Combining the adiabatic Hamiltonian $H_{ad}$ and the counterdiabatic (CD) terms to generate a second set of continuous quantum variables,
- Implementing the second set of continuous quantum variables on the Quantum Processing Unit (QPU) to control the analog quantum computer in a time-dependent counterdiabatic manner (in order) to reach the ground state of the adiabatic Hamiltonian $H_{ad}$, and
- Obtaining the ground state of the adiabatic Hamiltonian which encodes the solution to the combinatorial optimization problem.

A key feature of this invention is a counterdiabatic quantum computing method. Based on the adiabatic Hamiltonian explained above, counterdiabatic (CD) terms are calculated by being the adiabatic gauge potential of the driving part of the adiabatic Hamiltonian, and then merge these CD terms to the adiabatic Hamiltonian by implementing a new set of continuous quantum variables directly on an analog quantum computer where the new set of variables combine the adiabatic Hamiltonian variables and counterdiabatic terms to control the quantum analog computing system with time.

In certain embodiments, the adiabatic Hamiltonian $H_{ad}$ is an Ising Hamiltonian describing the combinatorial optimization problem in the form

$$\frac{H_{Ryd}(t)}{\hbar} = \underbrace{\frac{\Omega(t)}{2}\left[\cos\varphi(t)\sum_{i=1}^{N}\sigma_i^x - \sin\varphi(t)\sum_{i=1}^{N}\sigma_i^y\right] - \Delta(t)\sum_{i=1}^{N}n_i}_{H_{\text{driving}}} + \underbrace{\sum_{i<j}J_{i,j}\,n_i n_j}_{H_{\text{Ising}}}, (1)$$

wherein

the analog quantum computer uses neutral atoms Ground-Rydberg qubits, $\sigma_i^x, \sigma_i^y$ are Pauli X and Y operators on qubit $i, n_i = (1 - \sigma_i^z)/2$ and $\sigma_i^z$ is Pauli Z operator on qubit i,

$\Omega(t)$ is the Rabi frequency which describes the rate at which qubits transition between their two states when driven by an external oscillating field generated by a coupling laser, and is dynamically controlled by controlling the power of a coupling laser,

$\Delta(t)$ corresponds to detuning which represents the energy difference between the two states of the qubit with regards to a two-photon transition and is changed dynamically,

$\varphi(t)$ is the phase of at least one coupling laser, and

the term containing $J_{i,j}$ is an interactions term between an atom i and an atom j defined by a Rydberg blockade mechanism and is site-dependent or dynamically tuned,

$\hbar$ is the Planck constant. In certain embodiments, it is set to be $\hbar = 1$ to simplify the calculation.

In certain embodiments, the adiabatic Hamiltonian $H_{ad}$ is

$$H_{ions}(t) = \sum_i \frac{\Omega_i}{2}(\sigma_i^x cos\theta_i + \sigma_i^y sin\theta_i) + \sum_{i<j} J_{i,j}\, \sigma_i^x \sigma_j^x,$$

wherein

the analog quantum computer uses trapped ions,
the Hamiltonian is one example of effective Ising Hamiltonian under the rotating wave approximation, other format of Hamiltonian can also be considered.
$\Omega_i$ is resonant Raman Rabi frequency on ion i,
$\theta_i$ is an angle of spin i in an xy-plane of the Bloch sphere about the precession of an effective transverse magnetic field, and can be modulated through at least one coupling laser,

$J_{i,j}$ is an effective spin-spin coupling strength between an ion I and an ion j which is as $J_{ij} = \Omega_i \Omega_j \sum_m \frac{\eta_{im}\eta_{jm}}{\delta^2 - \omega_m^2}\omega_m$ ,
wherein $\Omega_i$ are Rabi frequencies on ion $i$, $\delta$ is a bichromatic detuning and $\omega_m$ is a mode frequency.

In certain embodiments,

- the value of the Rabi frequency $\Omega(t)$ is dynamically controlled by controlling the power of a coupling laser with time t,
- the value of detuning $\Delta(t)$ is dynamically controlled by the laser frequency over time, and/or
- the value of the relative phase of the coupling laser $\varphi(t)$ is dynamically controlled by the laser's phase over time.

In certain embodiments, the continuous quantum variables are controlled independently. For example, $\Omega(t)$, $\Delta(t)$, $\varphi(t)$, B(t), and/or $J_{ij}(t)$ are controlled independently.
In certain embodiments, the driving part of the adiabatic Hamiltonian comprises one-body Pauli X-, Y-, and Z-operators and their time-dependent coefficients.
In certain embodiments, the interaction part (describing interactions between qubits) of the adiabatic Hamiltonian comprises many-body terms, in particular many-body Pauli X-, Y- and/or Z-operators and their constant coefficients or is characterized by interactions between qubits.
In certain embodiments, the combination of the adiabatic Hamiltonian $H_{ad}$ and the CD terms comprises the Pauli X-, Y-, and/or Z-operators and their coefficients, wherein each coefficient of the operation is the summation of (i) a coefficient of the adiabatic Hamiltonian's corresponding Pauli operator, and (ii) a coefficient of the CD terms for the same Pauli operator.
In certain embodiments, the first set of continuous quantum variables is controllable by manipulating an external field or control signals of qubits of the analog quantum computer to drive or influence the quantum system's dynamics. For example, the interaction between neutral atoms and laser fields involves using laser beams to trap, cool, manipulate, and control neutral atoms.
In certain embodiments, the counterdiabatic (CD) terms are calculated by following the steps of

(1) defining a CD ansatz which comprises Pauli X-, and/or, Y-, and/or Z-operators and their time-dependent coefficients wherein those coefficients are unknown and are solved in the next step, and

(2) solving the coefficients for each Pauli operators by satisfying the equation $[\partial_t H_0 - i[H_0, H_{CD}], H_0] = 0$ , where $H_0$ is the driving part of the adiabatic Hamiltonian $H_{ad}$, given in Eq. (1) that constitutes the one-body terms as

$$H_0 = \frac{\Omega(t)}{2}\left[\cos\varphi(t)\sum_{i=1}^N \sigma_i^x - \sin\varphi(t)\sum_{i=1}^N \sigma_i^y\right] - \Delta(t)\sum_{i=1}^N n_i$$
.

In certain embodiments, the adiabatic gauge potential is characterized by compensating non-adiabatic transitions during the evolution, satisfying $[\partial_t H_{ad} - i[H_{ad}, A], H_{ad}] = 0$ , where $H_{ad}$ is the adiabatic Hamiltonian to obtain the adiabatic gauge potential A of an adiabatic Hamiltonian $H_0$.
In certain embodiments, the second set of continuous quantum variables comprises time-dependent control parameters obtained by the combination of the adiabatic Hamiltonian $H_{ad}$ and the counterdiabatic (CD) terms.

In certain embodiments, implementing the second set of continuous quantum variables comprises the step of replacing the first set of variables by the second set of variables to be the control variable of the analog quantum computer.

In certain embodiments, the second set of continuous quantum variables controls the analog quantum computer in a time-dependent counterdiabatic manner by evolving the quantum computing system through the second set of continuous quantum variables containing the counterdiabatic (CD) terms.

In certain embodiments, the solution to the combinatorial optimization problem is obtained by measuring the state of the quantum system at the final time which is the ground state of the adiabatic Hamiltonian at the final time encoding the solution to the combinatorial optimization problem.

In certain embodiments, the method of the invention comprises using an Ising Hamiltonian as the the adiabatic Hamiltonian $H_{ad}$ describing the combinatorial optimization problem in the following (neutral atoms hardware) form

$$H_{ad} = \frac{H_{Ryd}(t)}{\hbar} = \frac{\Omega(t)}{2}\left[\cos\varphi(t)\sum_{i=1}^{N}\sigma_i^x - \sin\varphi(t)\sum_{i=1}^{N}\sigma_i^y\right] - \Delta(t)\sum_{i=1}^{N}n_i + \sum_{i<j}J_{i,j}\,n_i n_j,$$

wherein

$H_{Ryd}(t)$ is used for denoting the Rydberg Hamiltonian $n_i = (1 - \sigma_i^z)/2$ ,
$\Omega(t)$ is the Rabi frequency of the transition,
$\Delta(t)$ corresponds to a detuning with regards to a two-photon transition,
$<p(t)$ is the phase of a coupling laser, and
the term containing $J_{i,j}$ is an interaction term.

The optimization problem is solved by determining the ground state of the final Hamiltonian. In particular, the Ising Hamiltonian is evolved into a final Hamiltonian at a final time, and the ground state of the final Hamiltonian is determined, thereby solving the combinatorial optimization problem. In other words, the evolution goes towards a Hamiltonian which has the solution of the computation problem as its ground state.

In certain embodiments of the method of the invention, the value of $\Omega(t)$ is controlled by controlling the power of a coupling laser with time.

In certain embodiments of the method of the invention, the value of $\Delta(t)$ is changed with time.

In certain embodiments of the method of the invention, the value of $\varphi(t)$ is a constant value, for example, $\varphi(t)=0$. In other embodiments, $\varphi(t)$ changes with time. In particular, $\varphi(t)$ may converge, for example, after iterations.

In certain embodiments of the method of the invention, the interactions term is implemented via a Rydberg blockade mechanism.

In certain embodiments of the method of the invention, the interactions term is rendered site-dependent or is dynamically tuned.

In certain embodiments of the method of the invention, the determination of the ground state of the final Hamiltonian comprises the step of: evolving the analog quantum computing system towards a Hamiltonian which has the solution of the computation problem as its ground state.

In certain embodiments of the method of the invention, the evolution of the Hamiltonian is performed in a counterdiabatic way.

In certain embodiments of the method of the invention, the value for the relative phase of the coupling laser with respect to the atom is controlled over time.

A coupling laser physically creates the terms containing $\sigma^x$, $\sigma^y$, $\sigma^z$ on the analog quantum computing hardware. The control of the parameters of the coupling laser allows for a time dependent control of the continuous quantum variables in front of those aforementioned terms. The phase of the laser, although available as a parameter to control, is only seldomly used in other methods but is a part of certain embodiments of the invention performed on neutral atom hardware. The invention does not require a modification of the given hardware. For hardware not using neutral atom hardware, the method can be applied in a similar fashion wherein the continuous quantum variables in front of the relevant terms are calculated as described here and the hardware is then controlled to allow for the time dependent control of the coefficients physically.

In certain embodiments, the time dependent control for the Rabi frequency, the detuning and the phase of the laser are computed to represent the Hamiltonian of the quantum system, and the summation of this Hamiltonian and the exact gauge potential of its driving Hamiltonian does not require an optimization iteration on the hardware itself.

In certain embodiments of the method of the invention, the analog quantum computer uses neutral atoms or trapped ions.

In certain embodiments of the invention, all three continuous variables can be controlled independently.

In the method of the invention, classical optimization is not necessary. There is no need for an optimization step on the quantum computer either. The method of the invention (in particular a ACQC control protocol) can be applied directly on a quantum hardware to solve different instances of optimization problems.

In a second aspect, the invention pertains to a data processing apparatus or device or system comprising means for carrying out [the steps of] the method described herein.

In a third aspect, the invention pertains to a computer program [product] comprising instructions which, when the program is executed by a computer, cause the computer to carry out [the steps of] the method described herein.

In a fourth aspect, the invention pertains to a computer-readable [storage] medium comprising instructions which, when executed by a computer, cause the computer to carry out [the steps of] the method described herein.

Other features and advantages of the invention will be apparent upon reading the detailed description and examples and reviewing the accompanying drawings of the figures.

**Detailed Description of the Invention**

Various embodiments of the invention are further described in more detail with reference to the accompanying drawings. However, the invention may be embodied in many other forms and should not be construed as limited to any certain structure or function discussed in the following description.

According to the description, it will be apparent to the ones skilled in the art that the scope of the invention encompasses any embodiment thereof, which is disclosed herein, irrespective of whether this embodiment is implemented independently or in concert with any other embodiment of the invention. For example, the method disclosed herein may be implemented in practice by using any numbers of the embodiments provided herein. Furthermore, it will be understood that any embodiment of the invention may be implemented using one or more of the elements presented in the appended claims.

Quantum optimization algorithms are quantum algorithms that are used to solve optimization problems.

The framework used to compute problems onto an analog quantum computer is the adiabatic computing and quantum annealing. For adiabatic quantum computing, one starts from a Hamiltonian which has a trivial ground state and evolves the system towards a Hamiltonian which has the solution of the computation problem as its ground state. The evolution should be adiabatic which yields very long computation times. This is limited by the coherence time of the system which does not allow complete adiabatic evolution. In the case of neutral hardware, the computation of combinatorial optimization can only be done with a non-adiabatic evolution between the initial Hamiltonian and the problem (also denoted the final) Hamiltonian. This leads to possible excitations in the energy spectrum and can yield the wrong final state, in other words a wrong solution to the problem. To circumvent that one can try optimizing the time dependent function with which the system changes from the initial Hamiltonian to the problem Hamiltonian. This function is called the scheduling function.

Quantum annealing starts from a quantum-mechanical superposition of all possible states (candidate states), optionally with equal weights. Then, the system is evolved by following the time-dependent Schrödinger equation, a natural quantum-mechanical evolution of physical systems. The amplitudes of all candidate states keep changing, realizing a quantum parallelism, according to the time-dependent strength of the driving field, which causes quantum tunneling between states. If the rate of change of the driving field is slow enough, the system stays close to the ground state of the instantaneous Hamiltonian. If the rate of change of the driving field is accelerated, the system may leave the ground state temporarily but produce a higher likelihood of concluding in the ground state of the final problem Hamiltonian, i.e., diabatic quantum computation. The driving field is finally switched off, and the system is expected to have reached the ground state of the problem Hamiltonian that corresponds to the solution to the original problem, e.g. an optimization problem.

In one aspect, the invention relates to a method or a computer-implemented method for solving a combinatorial optimization problem using an analog quantum computer. In certain embodiments, the method comprises the following steps:

- Providing a time-dependent adiabatic Hamiltonian $H_{ad}$ encoding the combinatorial optimization problem to a Quantum Processing Unit (QPU) of the analog quantum computer, wherein the adiabatic Hamiltonian $H_{ad}$ comprises:

  - a driving part $H_0$ comprising a first set of continuous quantum variables representing Pauli operators and their (time-dependent or constant) coefficients (which are controllable quantum variables that can be manipulated by time on the analog quantum computer), and

- an interaction part which comprises many-body terms describing interactions between qubits,

- Calculating counterdiabatic (CD) terms as being an adiabatic gauge potential of the driving part of the adiabatic Hamiltonian $H_{ad}$, and providing the counterdiabatic (CD) terms comprising Pauli operators and their time-dependent coefficients to compensate for a non-adiabatic transition during computation,

- Combining the adiabatic Hamiltonian $H_{ad}$ and the counterdiabatic (CD) terms to generate a second set of continuous quantum variables,

- Implementing the second set of continuous quantum variables on the Quantum Processing Unit (QPU) to control the analog quantum computer in a time-dependent counterdiabatic manner to reach the ground state of the adiabatic Hamiltonian $H_{ad}$, and

- Obtaining the ground state of the adiabatic Hamiltonian $H_{ad}$ which encodes the solution to the combinatorial optimization problem.

**The ACQC method**

Adiabatic computing is a known tool to solve optimization problems. By choosing an initial Hamiltonian $H(0)$ for which the corresponding ground state is known, the adiabatic process can ensure that one evolves the system from $H(0)$ to the final Hamiltonian $H(T)$ by changing the driving variables slowly enough while fulfilling the boundary conditions for $t = 0$ and $t = T$. In this case, the wave function of the system $|\psi(t)\rangle$ follows the instantaneous eigenstates of Hamiltonian $|n(t)\rangle$ while the optimization solutions are encoded to be the ground state of the final Hamiltonian. Therefore, the ground state of the final Hamiltonian is the target state.

However, the adiabatic evolution requires long computation times which is limited by the experiment, for example, the coherence time of the neutral atoms system. A non-adiabatic evolution or a noise of system can lead to excitations in the energy spectrum and can reduce the fidelity to the target state, in other words the success probability. The success probability is the probability of obtaining the solution of the problem with one run on the quantum hardware.

To circumvent that, the method of the invention, an analog counterdiabatic quantum computing method (ACQC), is provided in certain embodiments based on a counterdiabatic strategy. In certain embodiments, the method for solving combinatorial optimization problems is used on neutral atoms hardware, such as Maximum independent set (MIS) combinatorial optimization problems, which is classically NP-hard.

**Combinatorial optimization problem**

A lot of combinatorial optimization problems are based on trying to minimize a cost function written as

$$C = -\sum_{i}^{N} Z_i + \sum_{i,j}^{N} Z_i Z_j.$$

Maximum independent set (MIS) is a kind of a combinatorial optimization problem consisting of a graph of vertices connected by edges and for which the solution is the graph containing the maximum number of colored vertices without having two colored vertices connected by an edge.

Neutral atoms platforms are near-perfect candidates for tackling combinatorial optimization. Combinatorial optimization problems can be mapped onto an Ising Hamiltonian. This yields a graph problem where the long-range interactions with neighboring atoms that are responsible for the Rydberg blockade phenomenon which prevents two neighbor atoms to be excited both in the Rydberg state. The neutral atoms system with Ground-Rydberg mapping is explained below.

Examples of combinatorial optimization problems include the Traveling Salesman Problem, the Knapsack Problem, and the Graph Coloring Problem in all of their applications.

**The Ground-Rydberg Hamiltonian**

The Hamiltonian of neutral atoms platforms using a Ground-Rydberg qubit with the consideration of the phase of the driving field is:

$$\frac{H_{Ryd}(t)}{\hbar} = \frac{\Omega(t)}{2} \underbrace{\left[\cos\varphi(t) \sum_{i=1}^{N} \sigma_i^x - \sin\varphi(t) \sum_{i=1}^{N} \sigma_i^y\right] - \Delta(t) \sum_{i=1}^{N} n_i}_{H_{\text{driving}}} + \underbrace{\sum_{i<j} J_{i,j}\, n_i n_j}_{H_{\text{Ising}}}, \quad (1)$$

where $\Omega(t)$ is the Rabi frequency, $\Delta(t)$ is the detuning of the two-photon transition and $n_i = |1\rangle_i\langle 1| = (1 - \sigma_i^z)/2$.

$J_{i,j} \propto r_{i,j}^{-6}$ is the interaction strength which is a function of the distance between two atoms $i$ and $j$, $\varphi(t)$ is the phase of the driving field only the relative phase between applied pulses matters for the axis of rotation.

To simplify the calculation, $\hbar = 1$ is assumed here.

The initial state of a $N$ - atom system is $|0\rangle^{\otimes N}$ which is easy to be prepared. The ground state of final Hamiltonian $H_{Ryd}(T)$ encodes the solution to the combinatorial optimization problems. Combining the initial and target constraints, one obtains the boundary conditions of the control functions as follows

$$\Omega(0) = 0, \ \Delta(0) = -\Delta_1, \quad (2)$$

$$\Omega(T) = 0, \ \Delta(T) = \Delta_2, \quad (3)$$

where $-\Delta_1$ and $\Delta_2$ are the minimal (negative) and maximal (positive) experimental limitations of the detuning. Hereafter, a way to design the scheduling functions $\Omega(t)$, $\Delta(t)$ and $\varphi(t)$ is shown to not only fulfill the boundary conditions, but also improve the success probability for a shorter computational time.

In order to compute this problem, the way to implement on a neutral atom device is through the frame of adiabatic computing and quantum annealing.

For adiabatic quantum computing, the Hamiltonian of the Rydberg system in Eq. (1) is adiabatic $H_{ad}(t)$, and the start is a Hamiltonian which has a trivial ground state and evolves the system towards a Hamiltonian which has the solution of the computation problem as its ground state. The evolution should be adiabatic which yields very long computation times. This is limited by the coherence time of the system which does not allow complete adiabatic evolution.

In the case of neutral hardware, the computation of combinatorial optimization can only be done with a non-adiabatic evolution between the initial Hamiltonian and the problem (the final) Hamiltonian. This leads to possible excitations in the energy spectrum and can yield the wrong final state, in other words a wrong solution to the problem.

To circumvent that, it is necessary to focus on controlling continuous quantum variables by optimizing the time-dependent control functions, also denoted as the scheduling functions, with which the system evolves from its experimental prepared initial state towards a final state which is the solution of the computation problem. Therefore, compared with adiabatic quantum computing, this invention provides a better control of continuous quantum variables which is to use an adiabatic gauge potential inspired counterdiabatic (CD) process. Moreover, the CD ansatz of the concept of the invention may be iterable.

**The counterdiabatic process**

To obtain a counterdiabatic (CD) process, an auxiliary Hamiltonian $H_{CD}$ is added to the Rydberg Hamiltonian in Eq. (1) which guides the system through the evolution more reliably to the desired state, preventing non-adiabatic transitions. Therefore, the total Hamiltonian after adding CD terms becomes

$$H_{tot}(t) = H_{Ryd}(t) + H_{CD}(t). \quad (4)$$

There are different ways to add CD terms. Considering a current Ground-Rydberg quantum computing platform where the Ising mode interactions exist when the two near neighbor atoms $i$ and $j$ are both in the Rydberg states, which is the $n_i n_j$ terms in Eq. (1), the ACQC method described here does not add additional many-body interaction terms and the coupled control of $\sigma^x$ and $\sigma^y$ in certain embodiments so that the method can be directly implemented on analog hardware.

First, the following CD ansatz is used considering the format of Rydberg Hamiltonian

$$H_{CD} = f_x(t) \sum_i \sigma_i^x + f_y(t) \sum_i \sigma_i^y + f_z(t) \sum_i n_i, \quad (5)$$

Known that the adiabatic gauge potential can help ensure that the system follows the desired adiabatic path and reaches the ground state of a Hamiltonian $H_0$ at the final time, therefore, the constraint for $H_{CD}$ to be the solution of adiabatic potential of $H_0$ is

$$[\partial_t H_0 - i[H_0, H_{CD}], H_0] = 0. \quad (6)$$

Then, considering the independent spins under the control field, the Hamiltonian can be written as

$$H_0(t) = \frac{\Omega(t)}{2}\left[\cos\varphi(t) \sum_i \sigma_i^x - \sin\varphi(t) \sum_i \sigma_i^y\right] - \Delta(t) \sum_i n_i, \quad (7)$$

the general solution of the CD coefficients $f_{x, y, z}$ in Eq. (5) can be analytically solved as

$$f_x(t) \quad = \quad -\frac{\Omega\dot{\Delta} - \Delta\dot{\Omega}}{2(\Omega^2 + \Delta^2)}\sin\varphi + \frac{\Omega\Delta\dot{\varphi}}{2(\Omega^2 + \Delta^2)}\cos\varphi, \quad (8)$$

$$f_y(t) \quad = \quad -\frac{\Omega\dot{\Delta} - \Delta\dot{\Omega}}{2(\Omega^2 + \Delta^2)}\cos\varphi - \frac{\Omega\Delta\dot{\varphi}}{2(\Omega^2 + \Delta^2)}\sin\varphi, \quad (9)$$

$$f_z(t) \quad = \quad \frac{\Omega^2\dot{\varphi}}{\Omega^2 + \Delta^2}. \quad (10)$$

Finally, the total Rydberg Hamiltonian of the system with CD driving can be realized by a coupled $\sigma^x$ and $\sigma^y$ control as representing in the Rydberg Hamiltonian, which $\tilde{H}_{Ryd}(t) = H_{tot}(t)$ in Eq. (4):

$$\tilde{H}_{Ryd}(t) = \frac{\tilde{\Omega}(t)}{2}\left[\cos\tilde{\varphi}(t) \sum_i \sigma_i^x - \sin\tilde{\varphi}(t) \sum_i \sigma_i^y\right] - \tilde{\Delta}(t) \sum_i n_i + \sum_{i<j} J_{i,j} n_i n_j, \quad (11)$$

wherein

$$\tilde{\Omega}(t) \quad = \quad \sqrt{g_1^2 + g_2^2}, \quad (12)$$

$$\tilde{\Delta}(t) \quad = \quad \Delta - \frac{\Omega^2\dot{\varphi}}{\Omega^2 + \Delta^2}, \quad (13)$$

$$\tilde{\varphi}(t) \quad = \quad \varphi - \phi, \quad (14)$$

with

$$g_1(t) \;=\; \Omega\left(1+\frac{\Delta\dot{\varphi}}{\Omega^2+\Delta^2}\right), \qquad (15)$$

$$g_2(t) \;=\; -\frac{\Omega\dot{\Delta}-\Delta\dot{\Omega}}{\Omega^2+\Delta^2}, \qquad (16)$$

$$\sin\phi \;=\; \frac{g_2}{\sqrt{g_1^2+g_2^2}}, \qquad (17)$$

$$\cos\phi \;=\; \frac{g_1}{\sqrt{g_1^2+g_2^2}}. \qquad (18)$$

The ACQC protocol is designed by adding CD control functions in Eq. (8-10) based on the choice of scheduling functions for $\Omega(t)$, $\Delta(t)$ and $\varphi(t)$ which fulfil the boundary conditions in Eq. (2, 3), and then merging this CD control functions so that it can be performed in the experiments as shown in Eq. (11-18). On one hand, the results can be improved by searching for optimal parameters of the scheduling functions, one the other hand, the control functions can be iterable which means that after the first iteration, the control functions with CD ansatz are in Eq. (12 - 18), which can be regarded as the input of the control functions of $H_{Ryd}(t)$ then starts the second iteration from Eq. (4) again. Therefore, there may exist a fixed point of control functions after several round of iterations.

The method of the invention is not limited to solve a certain kind of combinatorial optimization problem, for example, one MIS graph problem Rather, it is capable of solving different graph problems even or solving larger or harder graphs.

Moreover, this method can be applied for other analog quantum computing platforms, for example hardware using trapped ions.

For example, under the rotating wave approximation an effective Ising Hamiltonian can be written as

$$H_{ions}(\mathrm{t}) = \sum_i \frac{\Omega_i}{2}(\sigma_i^x cos\theta_i + \sigma_i^y sin\theta_i) + \sum_{i<j} J_{i,j}\ \sigma_i^x\sigma_j^x,$$

where $\Omega_i$ is the resonant Raman Rabi frequency on ion $i$, $\theta_i$ is the angle of spin $i$ in the xy plane of the Bloch sphere about the precession of an effective transverse magnetic field, and in principle, they can be modulated through the addressing lasers. $J_{i,j}$ is the effective spin-spin coupling strength between an ion I and an ion j which can be defined as:

$$J_{ij} = \Omega_i\Omega_j \sum_m \frac{\eta_{im}\eta_{jm}}{\delta^2-\omega_m^2}\omega_m,$$

where the $\Omega_i$ are the Rabi frequencies, $\delta$ is the bichromatic detuning and $\omega_m$ is the mode frequency.

**Examples**

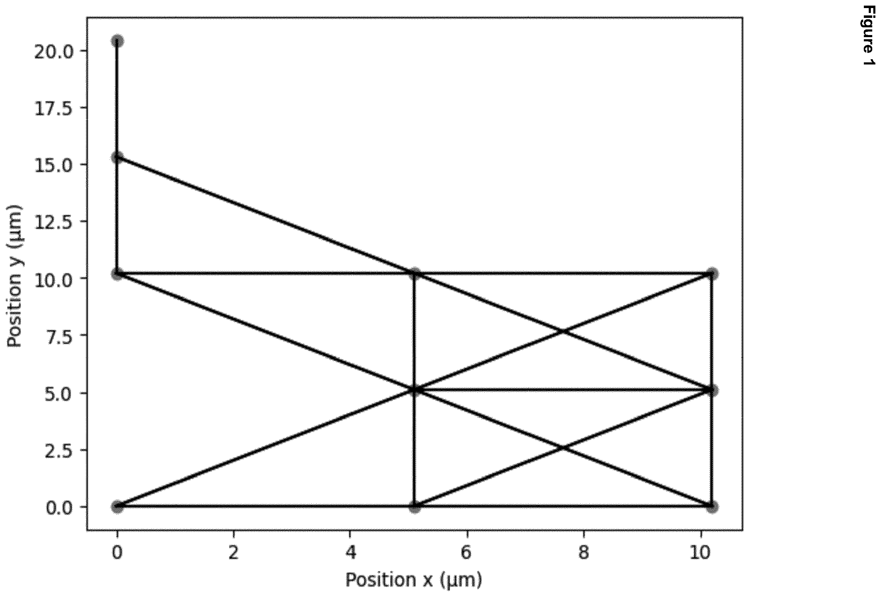

Computational experiments: Examples of solving MIS problems are described by solving combinatorial optimization problem in the form of a 10-atom graph problem. The 10-atom graph problem is to maximize the number of atoms to be in the excited Rydberg state while among all the 10 atoms placed on the graph, two neighbor atoms cannot be excited both at the same time to the Rydberg state because of the Rydberg blockade phenomenon, see Fig. 1.

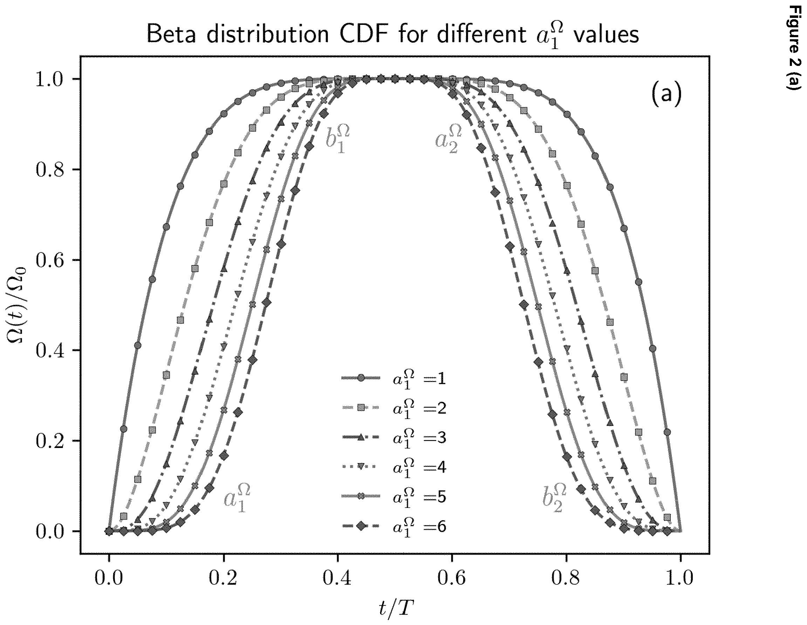

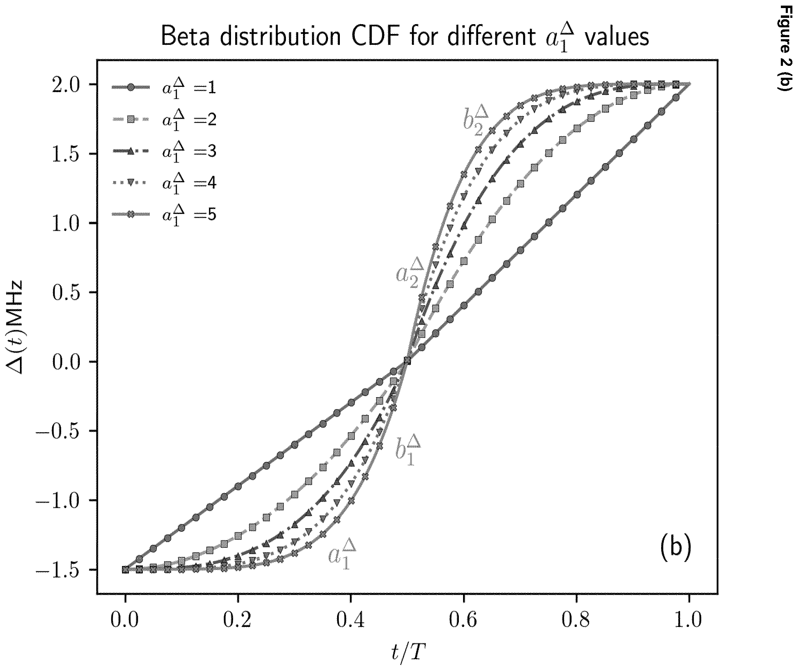

For control functions $\Omega(t)$ and $\Delta(t)$, the Beta distribution scheduling functions may be chosen with free parameters $(a_i,\ b_i)$ which satisfy the boundary conditions in Eq. (2, 3), see Fig. 2. By simply scanning the free parameters of the scheduling functions, one can obtain sets of values to improve the success probability which is the probability of obtaining the ground state of the final Hamiltonian encoding the solution of the problem with a single computation.

First, the simple example of $\varphi(t) = 0$ was tested, so the Rydberg Hamiltonian in Eq. (1) becomes

$$H_{Ryd}(t) = \frac{\Omega(t)}{2}\sum_i \sigma_i^x - \Delta(t)\sum_i n_i + \sum_{i<j} J_{i,j}\, n_i n_j. \qquad (19)$$

The CD ansatz becomes

$$H_{CD} = -\frac{\Omega\dot{\Delta} - \Delta\dot{\Omega}}{2(\Omega^2 + \Delta^2)}\sum_i \sigma_i^y. \qquad (20)$$

After adding this above CD terms, the control functions of Rydberg Hamiltonian in Eq. (11) becomes

$$\tilde{\Omega}(t) \;=\; \sqrt{g_1^2 + g_2^2}, \qquad (21)$$

$$\tilde{\Delta}(t) \;=\; \Delta, \qquad (22)$$

$$\tilde{\varphi}(t) \;=\; -\phi, \qquad (23)$$

wherein

$$g_1(t) \;=\; \Omega, \qquad (24)$$

$$g_2(t) \;=\; -\frac{\Omega\dot{\Delta} - \Delta\dot{\Omega}}{\Omega^2 + \Delta^2}, \qquad (25)$$

$$\tilde{\Omega}\cos\tilde{\varphi} \;=\; g_1, \qquad (26)$$

$$-\tilde{\Omega}\sin\tilde{\varphi} \;=\; g_2. \qquad (27)$$

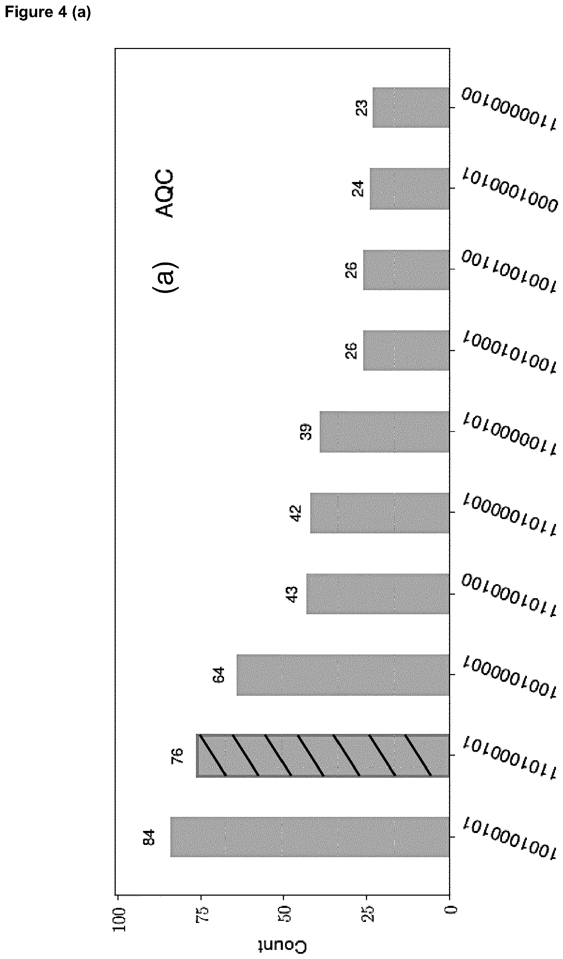

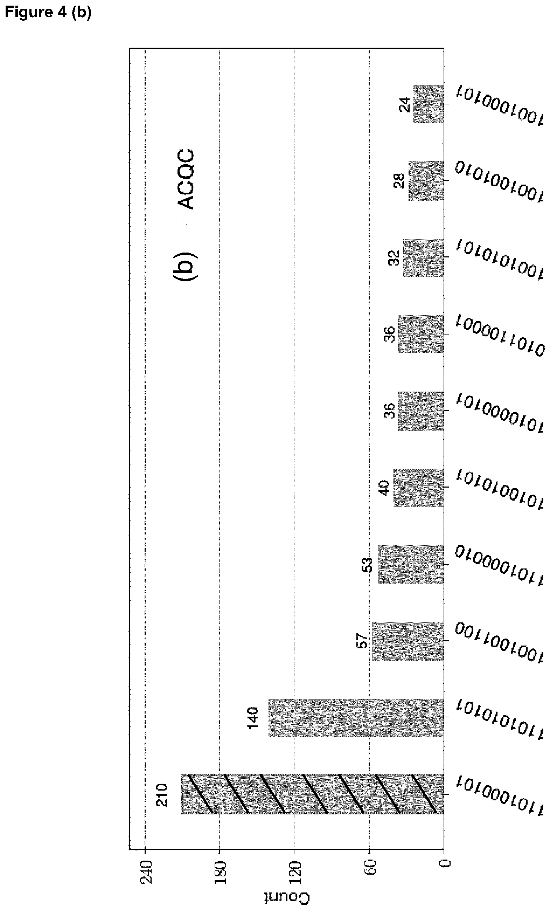

by scanning the free parameters to improve the success probability for a certain evolution time. For instance, for $T = 0.5\,\mu s$, the success probability is improved from 0.0818 without CD result to 0.2248 with CD (ACQC) for solving the graph with 10 atoms in Fig. 1. Importantly, the ACQC protocol solved the MIS problem by the most populated bit string being the target as shown in Fig.4.

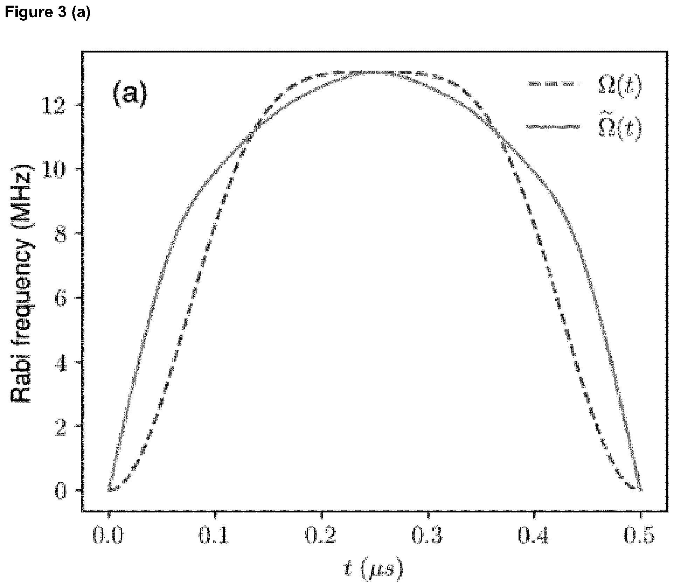

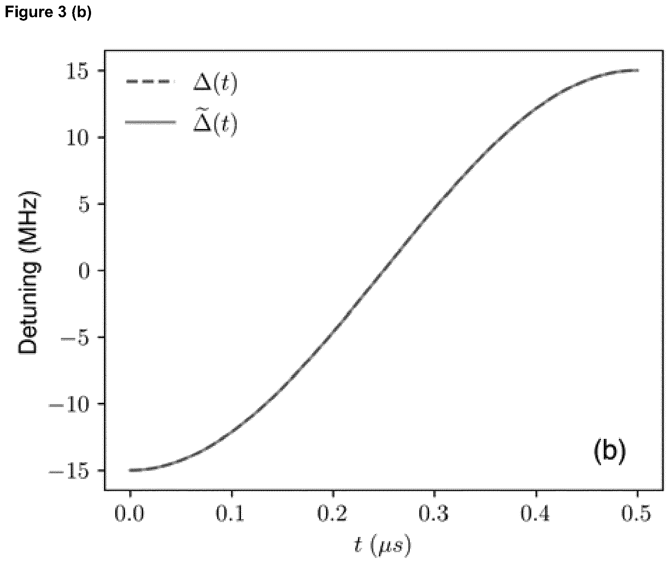

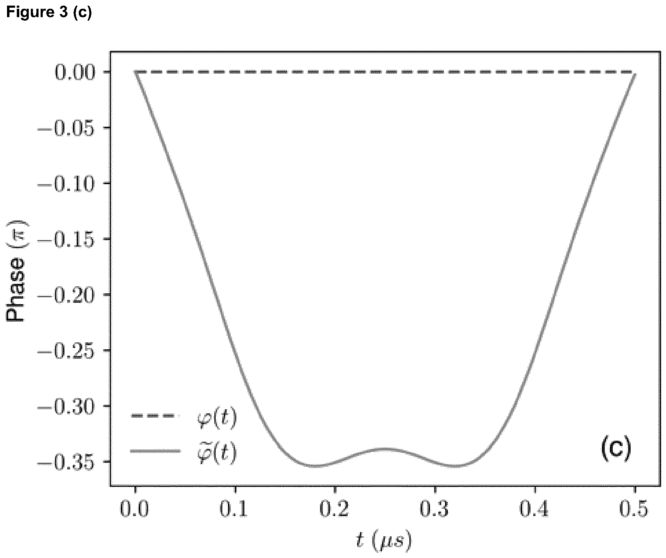

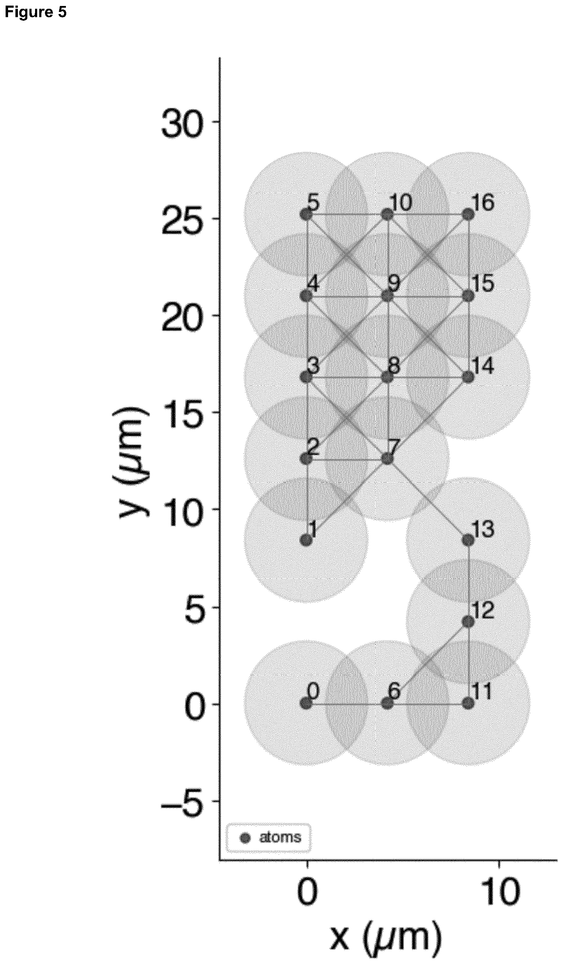

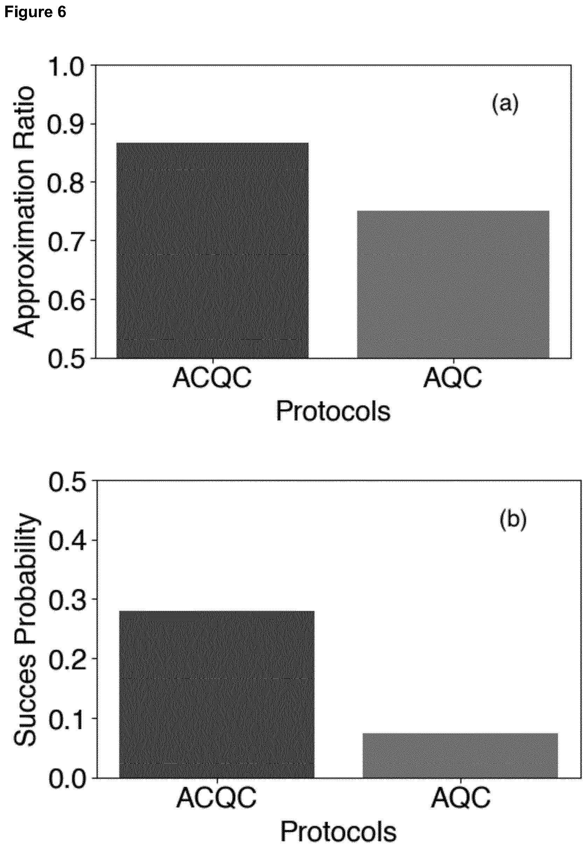

A larger graph, 17 atoms, shown on Fig. 5 was used to showcase the enhancement that I-ACQC yields over AQC by solving MIS for a total computational time $T = 1\,\mu s$. In Fig. 3, the control functions are plotted for AQC: $\Omega(t)$, $\Delta(t)$ and $\varphi(t)$ and the corresponding ACQC: $\tilde{\Omega}(t), \tilde{\Delta}(t), \tilde{\varphi}(t)$. The results are shown in Fig. 6 that for 1 $\mu s$, the success probability for AQC is 0.0735, and for our ACQC method 0.28. The approximation ratio for AQC is 0.75 and for ACQC 0.87.

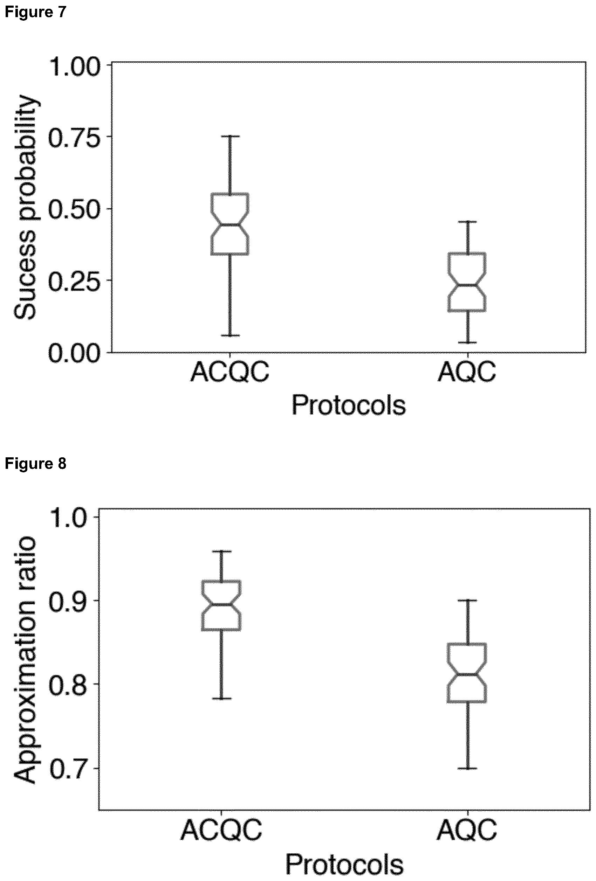

The method of the invention can, for example, solve different graph problems. The inventors show the success probability of 60 randomly generated graphs and each graph contains 15 atoms, see Fig. 7. As an example of $T = 1\,\mu s$ computational process, the enhancement compared with the adiabatic quantum computing method is seen. The inventors also plot the corresponding approximation ratio in Fig. 8 to compare our ACQC method with AQC. The approximation ratio is the ratio between the mean energy of the output of the protocol and the lowest energy i.e. the energy of the solution.

In certain embodiments of the method of the invention, a time-dependent control function for the phase $\varphi(t)$ is chosen. The choice of the time-dependent control function is made, for example, under the consideration of experimental limit of the time response and a smooth control as a function of time, for example it can be $\varphi(t) = \sin(3\pi t/T)$.

In certain embodiments of the method of the invention, an additional optimization algorithm is used to choose a better scheduling function for $\Omega(t)$, $\Delta(t)$ and $\varphi(t)$ before the calculation step in Eq. (11-18) so that after one iteration step, the computation result can be improved. In certain embodiments, there is no need to run an optimization on hardware. Such an additional optimization algorithm may be a classical optimizer, for example the Bayesian optimization method.

In certain embodiments of the method of the invention, the number of iteration steps is increased. The more iteration steps can be considered as follows. After one iteration, the set of control functions $\tilde{\Omega}(t)$, $\tilde{\Delta}(t)$, $\tilde{\varphi}(t)$ is obtained, then use this set of equations as input $\Omega(t)$, $\Delta(t)$ and $\varphi(t)$ to repeat the calculation from Eq. (11) to Eq. (18). After a certain number of iterations, the control functions may reach a fix point such that the set of control functions may be able to solve different graph problems. The number of iteration steps may lie, for example, between 1 and 1000, preferably between 1 and 100. In certain embodiments, the number of iteration steps may depend on the request of the enhancement.

**Figures**

The figures show:

**Figure 1:** An example of a 10-atom-graph. The ideal ground state $|1101000101\rangle$ of the final Hamiltonian $H_{Ryd}(T)$ encodes the Maximal Independent Set (MIS) solution of this graph problem.

**Figure 2:** The example of the control functions $\Omega(t)$ and $\Delta(t)$, with free parameters.

**Figure 3:** The comparison between the control functions of AQC: (a) $\Omega(t)$ (dashed line), (b) $\Delta(t)$ (dashed line), (c) $\varphi(t)$ (dashed line) and ACQC (a) $\tilde{\Omega}(t)$ (solid line), (b) $\tilde{\Delta}(t)$ (solid line) and (c) $\tilde{\varphi}(t)$ (solid line). Free parameters as shown in Fig. 2 are chosen to be: $\alpha_1^{\Omega}=2.3468, b_1^{\Omega} = 4.3918,$

$\alpha_2^{\Omega} = b_1^{\Omega}$ , $b_2^{\Omega} = \alpha_1^{\Omega}$ , $\alpha_1^{\Delta} =1.9178$, $b_1^{\Delta} =1.0986$, $\alpha_2^{\Delta} = b_1^{\Delta}$ , $b_2^{\Delta} = \alpha_1^{\Delta}$ . The other parameters are: $\Omega_0$=13rad/µs, $\Delta_1$=$\Delta_2$15 rad/µs, $T = 0.5µs$.

**Figure 4:** As an example of a 10-qubit-graph problem in Fig. 1, the ideal ground state of the final Hamiltonian $H_{Ryd}(T)$ is $|1101000101\rangle$. In the case of the initial state being $|\psi(0)\rangle = |0\rangle^{\otimes N}$, one can compare the bit string at final time T between (a) the adiabatic protocol AQC (without CD) and (b) ACQC. The corresponding control functions are plotted in Fig. 3. Parameters are $\Omega_0$=13rad/µs. $\Delta_1$=$\Delta_2$15 rad/µs, $T = 0.5µs$.

**Figure 5:** A 17-qubit-graph used as an example on which MIS is solved.

**Figure 6:** Comparing the results in solving MIS on the 17 qubits graph of Fig. 4 using I-ACQC and AQC with a total computation time of T=1 µs. In this embodiment, an emulator of neutral atom hardware is used to run the simulations. The corresponding control functions are plotted in Fig. 3 for $T$ = 1 µs. One can see the improvement in the two chosen metrics of the ACQC protocol over the AQC protocol: (a) approximation ratio for $T$ = 1 µs, (b) success probability for $T$ = 1 µs.

**Figure 7:** Box plot of the success probability as a function of total processing time $T$ = 1 µs of 60 randomly generated graphs and each graph contains 15 atoms. The comparison is between ACQC and AQC.

**Figure 8:** Box plot of the approximation ratio as a function of total processing time $T$ = 1 µs of 60 randomly generated graphs (same graphs as in Fig. 6) and each graph contains 15 atoms. The comparison is between ACQC and AQC.

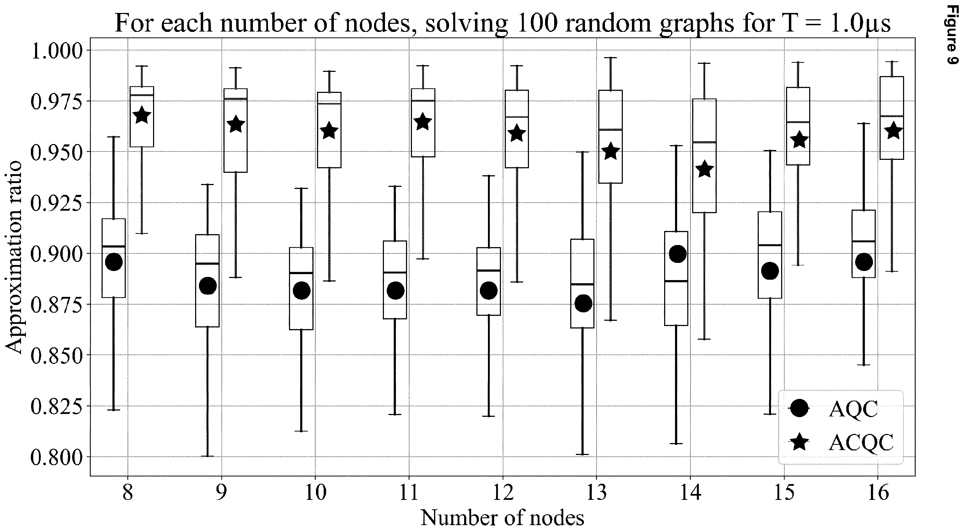

**Figure 9:** Approximation ratio for different problem instances (number of nodes). For each instance, 100 random graphs were solved and the average result has been provided.

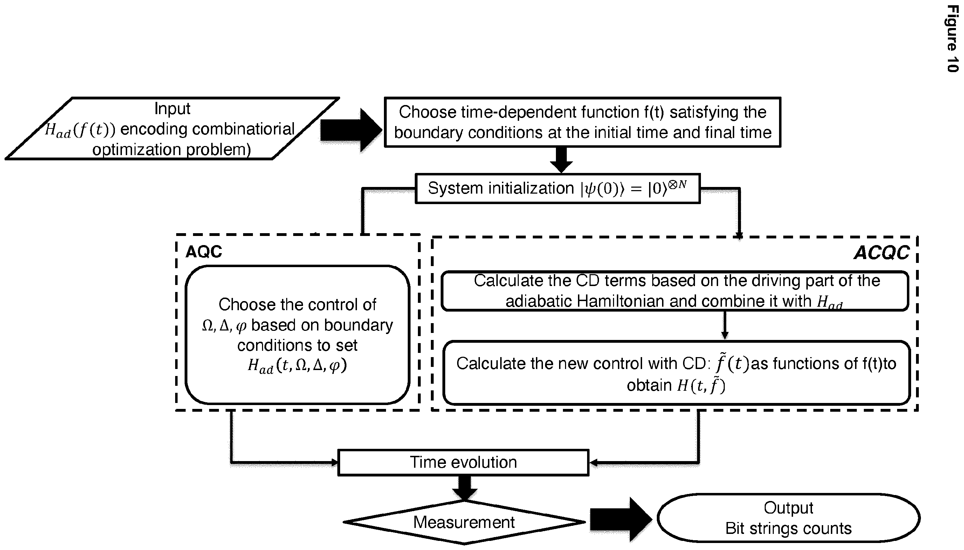

**Figure 10:** The flowchart of certain embodiments of the invention (ACQC framework) illustrating possible steps of the method of the invention.

Initially, input is a time-dependent adiabatic Hamiltonian comprising continuous and encoding a combinatorial optimization problem which is to be solved on an analog quantum computer. A time-dependent function $f(t)$ is supplied fulfilling the boundary conditions of the adiabatic Hamiltonian at the initial time of the computation and the final time of the computation. Then the dynamic evolution starts from the initial state $|\psi(0)\rangle = |0\rangle^{\otimes N}$ and through a series of time-dependent processes, the system continues the time evolution. At the step, one can choose (i) the adiabatic process so that the system will be under the control of $f(t)$. Since the dynamic system is commonly hard to be adiabatic, the alternative is (ii) ACQC: $\tilde{f}(t)$ is provided so that the system has a higher probability to reach the target state at the final time than the adiabatic process. At the end of the time evolution, a measurement is performed to obtain bit string counts or fidelity as the output.

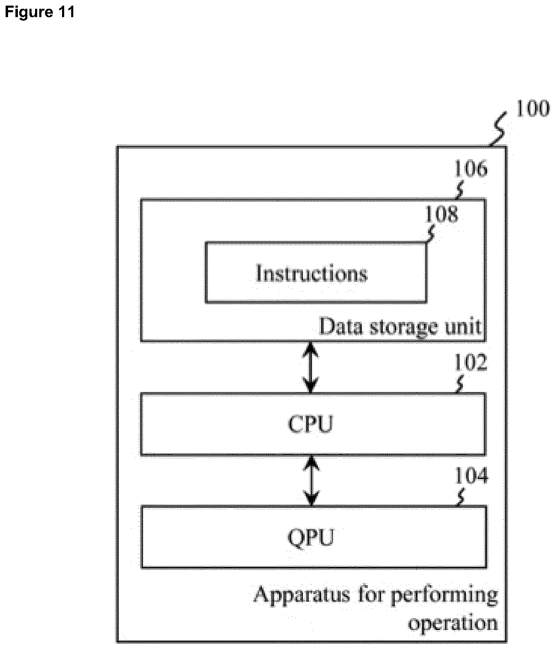

**Figure 11:** Apparatus (100) for performing a method for solving a combinatorial optimization problem involving analog counterdiabatic quantum computing (ACQC)

As shown in figure 11, the apparatus 100 comprises a central processing unit (CPU) 102, a quantum processing unit (QPU) 104, and a data storage unit 106. The QPU 104 is connected to the CPU 102. The data storage unit 106 is connected to the CPU 102 and stores processor-executable instructions 108. Being executed by the CPU 102, the processor-executable instructions 108 cause the CPU 102 to implement the aspects of the present invention.

The number, arrangement, and interconnection of the constructive elements constituting the apparatus 100, which are shown in figure 11, are not intended to be any limitation of the present invention, but merely used to provide a general idea and example of how the constructive elements may be implemented within the apparatus 100. For example, each of the CPU 102 and the QPU 104 may be replaced with several corresponding processing units, as well as the data storage unit 106 may be replaced with several removable and/or fixed storage devices, depending on particular applications. Furthermore, the apparatus 100 may further comprise a transceiving unit (not shown) which, for example, may be configured to receive the processor-executable instructions 108 from a remote server and store them to the data storage unit 106 before the operation of the apparatus 100, as well as transmit the operation results of the apparatus 100 to the remote server.

The CPU 102 may be implemented as a general-purpose processor, single-purpose processor, microcontroller, microprocessor, application specific integrated circuit (ASIC), field programmable gate array (FPGA), digital signal processor (DSP), complex programmable logic device, or alike. The CPU 102 may be implemented as any combination of one or more of the aforesaid. As an example, the CPU 102 may be a combination of two or more microprocessors.

The QPU 104 may refer to a physical (fabricated) or simulated processor that contains a number of interconnected qubits. In this sense, the QPU 104 serves as a quantum information storage device. The QPU 104 may include a single quantum processor, or two or more quantum processors. The QPU 104 may be based on a couple of Rydberg atoms held by optical tweezers in vacuum, or based on a 2D grid of transmon qubits on a chip. The QPU 104 may also take the form of a superconducting quantum processor. The superconducting quantum processor may include multiple qubits and a plurality of superconducting coupling devices operable to selectively connect the qubits in pairs and couple the pairs therebetween. Examples of the superconducting coupling device may include radio frequency superconducting quantum interference devices (rf-SQUIDs) and direct current SQUIDs (dc-SQUIDs), which couple the qubits together by magnetic flux.

Alternatively, charge-based coupling devices may be used in the QPU 104.

The data storage unit 106 may be implemented as a classical nonvolatile or volatile memory used in the modern electronic computing machines. As an example, the nonvolatile memory may include Read-Only Memory (ROM), ferroelectric Random- Access Memory (RAM), Programmable ROM (PROM), Electrically Erasable PROM (EEPROM), solid state drive (SSD), flash memory, magnetic disk storage (such as hard drives and magnetic tapes), optical disc storage (such as CD, DVD and Bluray discs), etc. As for the volatile memory, examples include Dynamic RAM, Synchronous DRAM (SDRAM), Double Data Rate SDRAM (DDR SDRAM), Static RAM, etc.

The processor-executable instructions 108 stored in the data storage unit 106 may be configured as a computer-executable code which causes the CPU 102 to implement the aspects of the present invention. The computer-executable code for carrying out operations or steps for the aspects of the present invention may be written in any combination of one or more programming languages, such as Java, C++, or the like. In some examples, the computer-executable code may be in the form of a high-level language or in a pre-compiled form and be generated by an interpreter (also pre-stored in the data storage unit 106).

## Claims

1. Computer-implemented method for solving a combinatorial optimization problem using an analog quantum computer, comprising the following steps:

- Providing a time-dependent adiabatic Hamiltonian $H_{ad}$ encoding the combinatorial optimization problem to a Quantum Processing Unit (QPU) of the analog quantum computer, wherein the adiabatic Hamiltonian $H_{ad}$ comprises:

- a driving part comprising a first set of continuous quantum variables representing Pauli operators and their coefficients, and
- an interaction part which comprises many-body terms describing interactions between qubits,

- Calculating counterdiabatic (CD) terms as being an adiabatic gauge potential of the driving part of the adiabatic Hamiltonian $H_{ad}$ , and providing the counterdiabatic (CD) terms comprising Pauli operators and their time-dependent coefficients to compensate for a non-adiabatic transition to the Quantum Processing Unit (QPU) of the analog quantum computer,

- Combining the adiabatic Hamiltonian $H_{ad}$ and the counterdiabatic (CD) terms to generate a second set of continuous quantum variables,

- Implementing the second set of continuous quantum variables on the Quantum Processing Unit (QPU) to control the analog quantum computer in a time-dependent counterdiabatic manner to reach the ground state of the adiabatic Hamiltonian $H_{ad}$, and

- Obtaining the ground state of the adiabatic Hamiltonian $H_{ad}$ which encodes the solution to the combinatorial optimization problem.

2. Method of claim 1, wherein the adiabatic Hamiltonian $H_{ad}$ is an Ising Hamiltonian describing the combinatorial optimization problem in the form

$$\frac{H_{Ryd}(t)}{\hbar} = \frac{\Omega(t)}{2}\left[\cos\varphi(t)\sum_{i=1}^{N}\sigma_i^x - \sin\varphi(t)\sum_{i=1}^{N}\sigma_i^y\right] - \Delta(t)\sum_{i=1}^{N}n_i + \sum_{i<j}J_{i,j}\,n_in_j,$$

wherein

the analog quantum computer uses neutral atoms Ground-Rydberg qubits, $\sigma_i^x, \sigma_i^y$ of are Pauli X and Y operators, respectively, on qubit i, $n_i = (1 - \sigma_i^z)/2$ and $\sigma_i^z$ is a Pauli Z operator on qubit i,

$\Omega(t)$ is the Rabi frequency which describes the rate at which qubits transition between their two states when driven by an external oscillating field generated by a coupling laser, and is dynamically controlled by controlling the power of a coupling laser,

$\Delta(t)$ corresponds to detuning which represents the energy difference between the two states of the qubit with regards to a two-photon transition and is changed dynamically,

$\varphi(t)$ is the phase of a coupling laser,

the term containing $J_{i,j}$ is an interactions term between an atom i and an atom j defined by a Rydberg blockade mechanism and is site-dependent or dynamically tuned, and

$\hbar$ is the Planck constant.

3. Method of claim 1, wherein the adiabatic Hamiltonian $H_{ad}$ is

$$H_{ions}(\text{t}) = \sum_i \frac{\Omega_i}{2}(\sigma_i^x \cos\theta_i + \sigma_i^y \sin\theta_i) + \sum_{i<j} J_{i,j}\,\sigma_i^x\sigma_j^x,$$

wherein

the analog quantum computer uses trapped ions,

the Hamiltonian is an effective Ising Hamiltonian under the rotating wave approximation,

$\Omega_i$ is resonant Raman Rabi frequency on ion i,

$\theta_i$ is an angle of spin i in an xy-plane of a Bloch sphere about the precession of an effective transverse magnetic field, and is modulated through at least one coupling laser,

$J_{i,j}$ is an effective spin-spin coupling strength between an ion i and an ion j which is as $J_{ij} =$

$\Omega_i\Omega_j\sum_m \frac{\eta_{im}\eta_{jm}}{\delta^2 - \omega_m^2}\omega_m$ , wherein $\Omega_i$ are Rabi frequencies on ion $i$, $\delta$ is a bichromatic detuning and $\omega_m$ is a mode frequency.

4. Method of claim 2 or 3, wherein

- the value of the Rabi frequency $\Omega(t)$ is dynamically controlled by controlling the power of the at least one coupling laser with time t,
- the value of detuning $\Delta(t)$ is dynamically controlled by the laser frequency over time, and/or
- the value of the relative phase of the coupling laser $\varphi(t)$ is dynamically controlled by the at least one coupling laser's phase over time.

5. Method of any of claims 2 to 4, wherein the continuous quantum variables are controlled independently, in particular wherein $\Omega(t)$, $\Delta(t)$, $\varphi(t)$, and B(t) are controlled independently.

6. Method of any of claims 1 to 5, wherein the driving part of the adiabatic Hamiltonian $H_{ad}$ comprises one-body Pauli X-, Y-, and Z-operators and their time-dependent coefficients.

7. Method of any of claims 1 to 6, wherein the interaction part of the adiabatic Hamiltonian $H_{ad}$ comprises many-body terms in the form of many-body Pauli X-, Y- and Z-operators and their constant coefficients.

8. Method of any of claims 1 to 7, wherein the combination of the adiabatic Hamiltonian $H_{ad}$ and the CD terms comprises the Pauli X-, Y-, and Z-operators and their coefficients, wherein each coefficient of the operation is the summation of (i) a coefficient of the adiabatic Hamiltonian's corresponding Pauli operator, and (ii) a coefficient of the CD terms for the same Pauli operator.

9. Method of any of claims 1 to 8, wherein the first set of continuous quantum variables is controllable by an external field or control signals of qubits of the analog quantum computer, in particular to influence the dynamics of the quantum system.

10. Method of any of claims 1 to 9, wherein the calculation of the counterdiabatic (CD) terms comprises the steps of

(1) defining a CD ansatz which comprises Pauli X- and/or Y- and/or Z-operators and their coefficients, and
(2) solving the coefficients for each Pauli X-, and/or Y- and/or Z-operators by satisfying the equation $[\partial_t H_0 - i[H_0, H_{CD}], H_0] = 0$.

11. Method of any of claims 1 to 10, wherein the adiabatic gauge potential is **characterized by** compensating non-adiabatic transitions during the evolution, satisfying $[\partial_t H_0 - i[H_0, A], H_0] = 0$ to obtain the adiabatic gauge potential A of an adiabatic Hamiltonian $H_0$.

12. Method of any of claims 1 to 11, wherein the second set of continuous quantum variables comprises time-dependent control parameters obtained by the combination of the adiabatic Hamiltonian $H_{ad}$ and the counterdiabatic (CD) terms.

13. Method of any of claims 1 to 12, wherein implementing the second set of continuous quantum variables comprises the step of replacing the first set of continuous quantum variables by the second set of continuous quantum variables to be the control variable of the analog quantum computer, in particular wherein the second set of continuous quantum variables controls the analog quantum computer in a time-dependent counterdiabatic manner by evolving the quantum computing system through the second set of continuous quantum variables containing the counterdiabatic (CD) terms.

14. Method of any of claims 1 to 13, wherein the solution to the combinatorial optimization problem is obtained by measuring the ground state of the adiabatic Hamiltonian $H_{ad}$ at the final time encoding the solution to the combinatorial optimization problem.

15. A data processing apparatus or system comprising means for carrying out the method of any of claims 1 to 14.

**Figure 1**

**Figure 2 (a)**

**Figure 2 (b)**

Beta distribution CDF for different $a_1^\Delta$ values

Figure 3 (a)

**Figure 3 (b)**

**Figure 3 (c)**

**Figure 4 (a)**

**Figure 4 (b)**

**Figure 5**

**Figure 6**

**Figure 7**

**Figure 8**

**Figure 9**

**Figure 10**

**Figure 11**

## EUROPEAN SEARCH REPORT

**Application Number**

EP 24 16 8871

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | Dalyac Constantin: "Quantum many-body dynamics for combinatorial optimisation and machine learning", PhD Thesis in Computer Science, 31 October 2023 (2023-10-31), XP093151072, Retrieved from the Internet: URL:https://theses.hal.science/tel-04265956/ [retrieved on 2024-04-12] * abstract * * page 14, line 1 - page 20, line 29 * * page 33, line 1 - line 17 * * page 41, line 1 - page 42, line 20 * * page 55, line 25 - page 56, line 10 * * page 133, line 1 - page 134, line 20 * | 1-15 | INV. G06N10/60 G06N10/20 G06N5/01 G06N10/40 |
| Y | SELS DRIES ET AL: "Minimizing irreversible losses in quantum systems by local counterdiabatic driving", PROCEEDINGS OF THE NATIONAL ACADEMY OF SCIENCES, vol. 114, no. 20, 16 May 2017 (2017-05-16), pages 1-8, XP093207335, ISSN: 0027-8424, DOI: 10.1073/pnas.1619826114 Retrieved from the Internet: URL:https://www.pnas.org/doi/pdf/10.1073/pnas.1619826114> * abstract * * page 2, column 2, line 1 - line 25 * * page 3, column 2, line 23 - line 51 * * page 5, column 1, line 1 - line 25 * * page 7, column 1, line 1 - column 2, line 21 * | 1-15 | |

**TECHNICAL FIELDS SEARCHED (IPC)**

G06N

The present search report has been drawn up for all claims

| Place of search | Date of completion of the search | Examiner |
|---|---|---|
| The Hague | 20 September 2024 | Rousset, Antoine |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)